# EUROPEAN PATENT APPLICATION

(11) **EP 4 561 053 A1**
(43) Date of publication of application: **28.05.2025**
(21) Application number: 23872763.0
(22) Date of filing: 03.08.2023
(51) Int. Cl.: H04N 7/01, H04N 23/745, H04N 23/73, H04N 21/426

(54) **FLICKER CORRECTION METHOD AND ELECTRONIC DEVICE THEREFOR**

(30) Priority: 28.09.2022 KR 20220123436; 03.11.2022 KR 20220145248
(71) Applicant: Samsung Electronics Co., Ltd., Suwon-si, Gyeonggi-do 16677 (KR)
(72) Inventor: KIM, Seonghun, Suwon-si, Gyeonggi-do 16677 (KR); WOO, Kwangtaek, Suwon-si, Gyeonggi-do 16677 (KR); CHOI, Jaeho, Suwon-si, Gyeonggi-do 16677 (KR); KIM, Mingyu, Suwon-si, Gyeonggi-do 16677 (KR); AN, Jinwan, Suwon-si, Gyeonggi-do 16677 (KR)
(74) Representative: Appleyard Lees IP LLP
(86) International application number: PCT/KR2023/011386
(87) International publication number: WO 2024/071639

(57) **Abstract**

An electronic device according to an embodiment may comprise a camera module that acquires an image of a subject device. The electronic device may comprise a processor that receives an image from the camera module and detects a flicker phenomenon in the image. The electronic device may comprise a communication module that attempts to establish a communication connection with the subject device. The communication module of the electronic device may, if the communication connection is successful, request display information from the subject device. The communication module may receive the display information from the subject device. The processor may, on the basis of the display information, transmit a control signal causing the subject device to adjust a scan rate of a display to the subject device through the communication module.

## Description

### TECHNICAL FIELD

The various embodiments of the following description relate to a flickering correction method and an electronic device corresponding thereto.

### BACKGROUND ART

As camera technology advances, the demand for a faster shutter speed and a camera environment are also evolving accordingly. An adaptive frequency changes a scan rate to 120 hertz (Hz) for a mobile game that requires fast screen transition, to 60 Hz for a movie, to 30 Hz for checking and inputting general text, such as an email, and to 10 Hz for a still image, such as a photo and a social networking service (SNS).

Shutter speed technology is being developed to make a shutter speed faster. Users are demanding a faster shutter speed to enjoy a photo and an image with a higher quality and are increasingly demanding a faster shutter speed to capture an image, from a 24 Hz image in the past to a 60 Hz image currently, and a 120 Hz image to enjoy much smoother motion.

### DISCLOSURE OF THE INVENTION

### TECHNICAL SOLUTIONS

An electronic device according to an embodiment may include a camera module configured to acquire an image of a subject device. The electronic device according to an embodiment may include a processor configured to receive the image from the camera module and configured to detect a flickering phenomenon from the image. The electronic device according to an embodiment may include a communication module configured to attempt to establish a communication connection with the subject device. The communication module of the electronic device according to an embodiment may be configured to request display information from the subject device when the communication connection is successful. The communication module may be configured to receive the display information from the subject device. The processor according to an embodiment may be configured to transmit, to the subject device, a control signal such that the subject device adjusts a scan rate of a display through the communication module, based on the display information.

A control method of an electronic device according to an embodiment may include acquiring an image of a subject device. The control method of the electronic device according to an embodiment may include detecting a flickering phenomenon from the image. The control method of the electronic device according to an embodiment may include attempting to establish a communication connection with the subject device. The control method of the electronic device according to an embodiment may include requesting display information from the subject device when the communication connection is successful. The control method of the electronic device according to an embodiment may include receiving the display information from the subject device. The control method of the electronic device according to an embodiment may include transmitting a control signal such that the subject device adjusts a scan rate of a display, based on the display information.

A computer program stored in a medium according to an embodiment may be combined with hardware and execute acquiring an image of a subject device. The computer program stored in the medium according to an embodiment may be combined with hardware and execute detecting a flickering phenomenon in the image. The computer program stored in the medium according to an embodiment may be combined with hardware and execute attempting to establish a communication connection with the subject device. The computer program stored in the medium according to an embodiment may be combined hardware and execute requesting display information from the subject device when the communication connection is successful. The computer program stored in the medium according to an embodiment may be combined hardware and execute receiving the display information from the subject device. The computer program stored in the medium according to an embodiment may be combined hardware and execute transmitting a control signal such that the subject device adjusts a scan rate of a display, based on the display information.

A non-transitory computer-readable storage medium according to an embodiment may store a computer program that executes detecting a flickering phenomenon from an image. The non-transitory computer-readable storage medium according to an embodiment may store a computer program that executes acquiring an image of a subject device. The non-transitory computer-readable storage medium according to an embodiment may store a computer program that executes attempting to establish a communication connection with the subject device. The non-transitory computer-readable storage medium according to an embodiment may store a computer program that executes requesting display information from the subject device when the communication connection is successful. The non-transitory computer-readable storage medium according to an embodiment may store a computer program that executes receiving the display information from the subject device. The non-transitory computer-readable storage medium according to an embodiment may store a computer program that executes transmitting a control signal such that the subject device adjusts a scan rate of a display, based on the display information.

### BRIEF DESCRIPTION OF DRAWINGS

FIG. 1 is a block diagram illustrating an electronic device in a network environment, according to an embodiment.
FIG. 2 is a block diagram illustrating a camera module according to an embodiment.
FIG. 3A is a diagram schematically illustrating a subject device from which a flickering phenomenon is detected, according to an embodiment.
FIG. 3B is a flowchart schematically illustrating a flickering correction method according to an embodiment.
FIG. 4 is a flowchart illustrating a control method of an electronic device, according to an embodiment.
FIG. 5 is a flowchart illustrating a communication connection between an electronic device and a subject device, according to an embodiment.
FIG. 6 illustrates communication through a hub between an electronic device and a subject device, according to an embodiment.

### BEST MODE FOR CARRYING OUT THE INVENTION

Hereinafter, embodiments will be described in detail with reference to the accompanying drawings. When describing the embodiments with reference to the accompanying drawings, like reference numerals refer to like elements and a repeated description related thereto will be omitted.

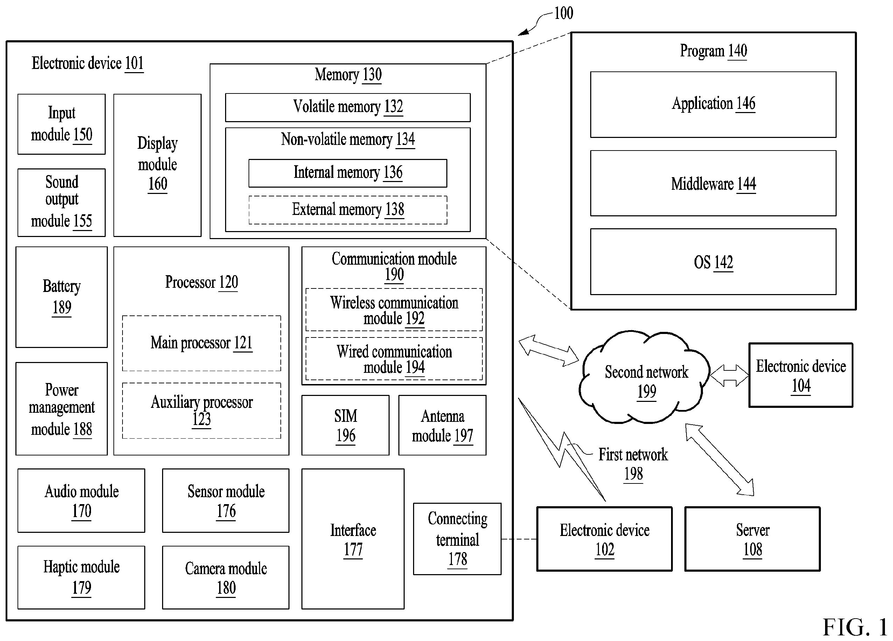

FIG. 1 is a block diagram illustrating an electronic device in a network environment, according to an embodiment.

Referring to FIG. 1, an electronic device 101 in a network environment 100 may communicate with an electronic device 102 via a first network 198 (e.g., a short-range wireless communication network), or communicate with at least one of an electronic device 104 and a server 108 via a second network 199 (e.g., a long-range wireless communication network). According to an embodiment, the electronic device 101 may communicate with the electronic device 104 via the server 108. According to an embodiment, the electronic device 101 may include a processor 120, a memory 130, an input module 150, a sound output module 155, a display module 160, an audio module 170, and a sensor module 176, an interface 177, a connecting terminal 178, a haptic module 179, a camera module 180, a motor 187, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added to the electronic device 101. In some embodiments, some of the components (e.g., the sensor module 176, the camera module 180, or the antenna module 197) may be integrated as a single component (e.g., the display module 160).

The processor 120 may execute, for example, software (e.g., a program 140) to control at least one other component (e.g., a hardware or software component) of the electronic device 101 connected to the processor 120 and may perform various data processing or computations. According to an embodiment, as at least a part of data processing or computations, the processor 120 may store a command or data received from another component (e.g., the sensor module 176 or the communication module 190) in a volatile memory 132, process the command or the data stored in the volatile memory 132, and store resulting data in a non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from or in conjunction with the main processor 121. For example, when the electronic device 101 includes the main processor 121 and the auxiliary processor 123, the auxiliary processor 123 may be adapted to consume less power than the main processor 121 or to be specific to a specified function. The auxiliary processor 123 may be implemented separately from the main processor 121 or as a part of the main processor 121.

The auxiliary processor 123 may control at least some of functions or states related to at least one (e.g., the display module 160, the sensor module 176, or the communication module 190) of the components of the electronic device 101, instead of the main processor 121 while the main processor 121 is in an inactive (e.g., sleep) state or along with the main processor 121 while the main processor 121 is an active state (e.g., executing an application). According to an embodiment, the auxiliary processor 123 (e.g., an ISP or a CP) may be implemented as a portion of another component (e.g., the camera module 180 or the communication module 190) that is functionally related to the auxiliary processor 123. According to an embodiment, the auxiliary processor 123 (e.g., an NPU) may include a hardware structure specifically for artificial intelligence model processing. An artificial intelligence model may be generated by machine learning. The machine learning may be performed by, for example, the electronic device 101, in which artificial intelligence is performed, or performed via a separate server (e.g., the server 108). Learning algorithms may include, but are not limited to, for example, supervised learning, unsupervised learning, semi-supervised learning, or reinforcement learning. The artificial intelligence (AI) model may include a plurality of artificial neural network layers. An artificial neural network may include, for example, a deep neural network (DNN), a convolutional neural network (CNN), a recurrent neural network (RNN), a restricted Boltzmann machine (RBM), a deep belief network (DBN), and a bidirectional recurrent deep neural network (BRDNN), a deep Q-network, or a combination of two or more thereof, but is not limited thereto. The AI model may additionally or alternatively include a software structure other than the hardware structure.

The memory 130 may store various pieces of data used by at least one component (e.g., the processor 120 or the sensor module 176) of the electronic device 101. The various pieces of data may include, for example, software (e.g., the program 140) and input data or output data for a command related thereto. The memory 130 may include the volatile memory 132 or the non-volatile memory 134.

The program 140 may be stored as software in the memory 130 and may include, for example, an operating system (OS) 142, middleware 144, or an application 146.

The input module 150 may receive, from outside (e.g., a user) the electronic device 101, a command or data to be used by another component (e.g., the processor 120) of the electronic device 101. The input module 150 may include, for example, a microphone, a mouse, a keyboard, a key (e.g., a button), or a digital pen (e.g., a stylus pen).

The sound output module 155 may output a sound signal to the outside of the electronic device 101. The sound output module 155 may include, for example, a speaker or a receiver. The speaker may be used for general purposes, such as playing multimedia or playing a recording. The receiver may be used to receive an incoming call. According to an embodiment, the receiver may be implemented separately from the speaker or as a part of the speaker.

The display module 160 may visually provide information to the outside (e.g., a user) of the electronic device 101. The display module 160 may include, for example, a control circuit for controlling a display, a hologram device, or a projector and control circuitry to control its corresponding one of the display, the hologram device, and the projector. According to an embodiment, the display module 160 may include a touch sensor adapted to detect a touch, or a pressure sensor adapted to measure the intensity of force of the touch.

The audio module 170 may convert sound into an electric signal or vice versa. According to an embodiment, the audio module 170 may obtain the sound via the input module 150 or output the sound via the sound output module 155 or an external electronic device (e.g., the electronic device 102, such as a speaker or headphones) directly or wirelessly connected to the electronic device 101.

The sensor module 176 may detect an operational state (e.g., power or temperature) of the electronic device 101 or an environmental state (e.g., a state of a user) external to the electronic device 101 and generate an electric signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used by the electronic device 101 to couple with the external electronic device (e.g., the electronic device 102) directly (e.g., by wire) or wirelessly. According to an embodiment, the interface 177 may include, for example, a high-definition multimedia interface (HDMI), a universal serial bus (USB) interface, a secure digital (SD) card interface, or an audio interface.

The connecting terminal 178 may include a connector via which the electronic device 101 may physically connect to an external electronic device (e.g., the electronic device 102). According to an embodiment, the connecting terminal 178 may include, for example, an HDMI connector, a USB connector, an SD card connector, or an audio connector (e.g., a headphones connector).

The haptic module 179 may convert an electric signal into a mechanical stimulus (e.g., a vibration or a movement) or an electrical stimulus, which may be recognized by a user via their tactile sensation or kinesthetic sensation. According to an embodiment, the haptic module 179 may include, for example, a motor, a piezoelectric element, or an electric stimulator.

The camera module 180 may capture a still image and moving images. According to an embodiment, the camera module 180 may include one or more lenses, image sensors, ISPs, and flashes.

The power management module 188 may manage power supplied to the electronic device 101. According to an embodiment, the power management module 188 may be implemented as, for example, at least a part of a power management integrated circuit (PMIC).

The battery 189 may supply power to at least one component of the electronic device 101. According to an embodiment, the battery 189 may include, for example, a primary cell, which is not rechargeable, a secondary cell, which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more CPs that are operable independently from the processor 120 (e.g., an AP) and that support direct (e.g., wired) communication or wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module, or a power line communication (PLC) module). A corresponding one of these communication modules may communicate with the external electronic device, for example, the electronic device 104, via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., a LAN or a wide area network (WAN)). These various types of communication modules may be implemented as a single component (e.g., a single chip), or may be implemented as multiple components (e.g., multiple chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., a mmWave band) to achieve, e.g., a high data transmission rate. The wireless communication module 192 may support various technologies for securing performance on a high-frequency band, such as, e.g., beamforming, massive multiple-input and multiple-output (MIMO), full dimensional MIMO (FD-MIMO), an array antenna, analog beam-forming, or a large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., an antenna array). In such a case, at least one antenna appropriate for a communication scheme used in a communication network, such as the first network 198 or the second network 199, may be selected by, for example, the communication module 190 from the plurality of antennas. The signal or power may be transmitted or received between the communication module 190 and the external electronic device via the at least one selected antenna. According to an embodiment, another component (e.g., a radio frequency integrated circuit (RFIC)) other than the radiating element may be additionally formed as a part of the antenna module 197.

According to various embodiments, the antenna module 197 may form a mmWave antenna module. According to an embodiment, the mmWave antenna module may include a PCB, an RFIC on a first surface (e.g., the bottom surface) of the PCB, or adjacent to the first surface of the PCB and capable of supporting a designated high-frequency band (e.g., a mmWave band), and a plurality of antennas (e.g., array antennas) disposed on a second surface (e.g., the top or a side surface) of the PCB, or adjacent to the second surface of the PCB and capable of transmitting or receiving signals of the designated high-frequency band.

At least some of the above-described components may be coupled mutually and exchange signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device (e.g., the electronic device 104 via the server 108 coupled with the second network 199. Each of the external electronic devices (e.g., the electronic device 102 or 104) may be a device of the same type as or a different type from the electronic device 101. According to an embodiment, all or some of operations to be executed by the electronic device 101 may be executed by one or more external electronic devices (e.g., the electronic devices 102 and 104 and the server 108). For example, if the electronic device 101 needs to perform a function or a service automatically, or in response to a request from a user or another device, the electronic device 101, instead of, or in addition to, executing the function or the service, may request the one or more external electronic devices to perform at least part of the function or service. The one or more external electronic devices receiving the request may perform the at least part of the function or service, or an additional function or an additional service related to the request and may transfer a result of the performance to the electronic device 101. The electronic device 101 may provide the result, with or without further processing the result, as at least part of a response to the request. To that end, cloud computing, distributed computing, mobile edge computing (MEC), or client-server computing technology may be used, for example. The electronic device 101 may provide ultra low-latency services using, e.g., distributed computing or MEC. In an embodiment, the external electronic device (e.g., the electronic device 104) may include an Internet-of-things (IoT) device. The server 108 may be an intelligent server using machine learning and/or a neural network. According to an embodiment, the external electronic device (e.g., the electronic device 104) or the server 108 may be included in the second network 199. The electronic device 101 may be applied to intelligent services (e.g., a smart home, a smart city, a smart car, or healthcare) based on 5G communication technology or IoT-related technology.

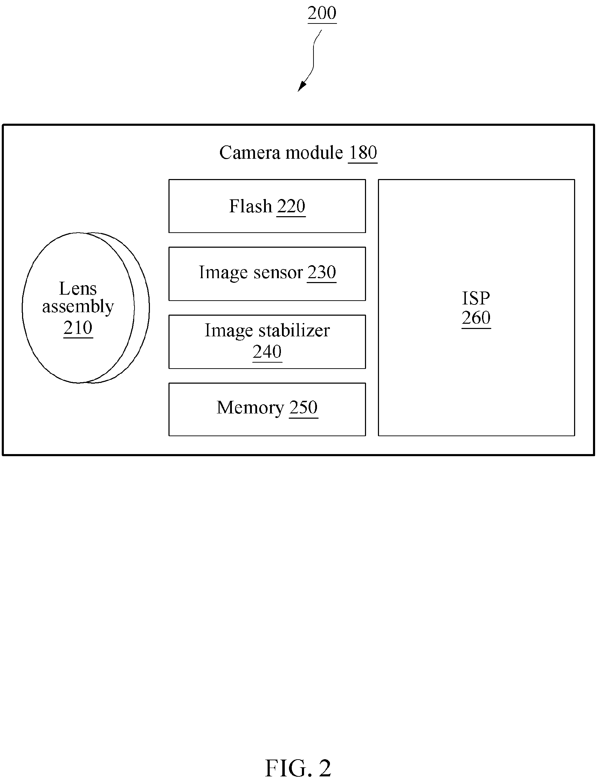

FIG. 2 is a block diagram 200 illustrating a camera module according to an embodiment.

Referring to FIG. 2, the camera module 180 may include a lens assembly 210, a flash 220, an image sensor 230, an image stabilizer 240, a memory 250 (e.g., a buffer memory), or an ISP 260. The lens assembly 210 may collect light emitted from an object, which is a target of which an image is to be captured. The lens assembly 210 may include one or more lenses. According to an embodiment, the camera module 180 may include a plurality of lens assemblies 210. The camera module 180 may constitute, for example, a dual camera, 360-degree camera, or spherical camera. A portion of the plurality of lens assemblies 210 may have the same lens properties (e.g., an angle of view, focal length, autofocus, f-number, or optical zoom), or at least one of the plurality of lens assemblies 210 may have one or more lens properties that are different from those of other lens assemblies. The lens assembly 210 may include, for example, a wide-angle lens or a telephoto lens.

The flash 220 may emit light to be used to enhance light emitted or reflected from the object. According to an embodiment, the flash 220 may include one or more light-emitting diodes (LEDs) (e.g., a red-green-blue (RGB) LED, white LED, infrared (IR) LED, or ultraviolet (UV) LED) or a xenon lamp. The image sensor 230 may obtain an image corresponding to the object by converting light emitted or reflected from the object and transmitted through the lens assembly 210 into an electrical signal. According to an embodiment, the image sensor 230 may include, for example, one image sensor selected from among image sensors having different properties, such as, for example, an RGB sensor, black and white (BW) sensor, IR sensor, or UV sensor, a plurality of image sensors having the same property, or a plurality of image sensors having different properties. Each image sensor included in the image sensor 230 may be implemented using, for example, a charged-coupled device (CCD) sensor or a complementary metal-oxide-semiconductor (CMOS) sensor.

The image stabilizer 240 may move at least one lens included in the lens assembly 210 or the image sensor 230 in a specific direction or control an operation characteristic (e.g., adjust the read-out timing) of the image sensor 230 in response to movement of the camera module 180 or the electronic device 101 including the camera module 180. This may compensate for at least a portion of a negative effect of the movement on an image to be captured. According to an embodiment, the image stabilizer 240 may sense such a movement of the camera module 180 or the electronic device 101 using a gyro sensor (not shown) or an acceleration sensor (not shown) disposed inside or outside the camera module 180. According to an embodiment, the image stabilizer 240 may be implemented as, for example, an optical image stabilizer. The memory 250 may temporarily store at least a portion of the image obtained through the image sensor 230 for a subsequent image processing operation. For example, when image acquisition is delayed by a shutter or a plurality of images is obtained at a high speed, an obtained original image (e.g., a Bayer-patterned image or high-resolution image) may be stored in the memory 250, and a copy image (e.g., a low-resolution image) corresponding the original image may be previewed through the display module 160. Subsequently, when a specified condition (e.g., a user input or system command) is satisfied, at least a portion of the original image stored in the memory 250 may be obtained and processed by, for example, the ISP 260. According to an embodiment, the memory 250 may be configured as at least part of the memory 130 or as a separate memory operated independently from the memory 130.

The ISP 1560 may perform one or more image processing operations on an image obtained via the image sensor 230 or an image stored in the memory 250. The one or more image processing operations may include, for example, depth map generation, three-dimensional (3D) modeling, panorama generation, feature point extraction, image synthesis, or image compensation (e.g., noise reduction, resolution adjustment, brightness adjustment, blurring, sharpening, or softening). Additionally or alternatively, the ISP 260 may control at least one of the components (e.g., the image sensor 230) included in the camera module 180. For example, the ISP 260 may control an exposure time, read-out timing, and the like. The image processed by the ISP 260 may be stored again in the memory 250 for further processing or be provided to an external component (e.g., the memory 130, the display module 160, the electronic device 102, the electronic device 104, or the server 108) of the camera module 180. According to an embodiment, the ISP 260 may be configured as at least part of the processor 120 or as a separate processor operated independently from the processor 120. When the ISP 260 is configured as a processor that is separate from the processor 120, at least one image processed by the ISP 260 may be displayed as it is or be displayed through the display module 160 after additional image processing is performed by the processor 120.

According to an embodiment, the electronic device 101 may include a plurality of camera modules 180 having different properties or functions. In this case, for example, at least one of the plurality of camera modules 180 may be a wide-angle camera, and at least one other of the plurality of camera modules 180 may be a telephoto camera. Similarly, at least one of the plurality of camera modules 180 may be a front camera, and at least one other of the plurality of camera modules 180 may be a rear camera.

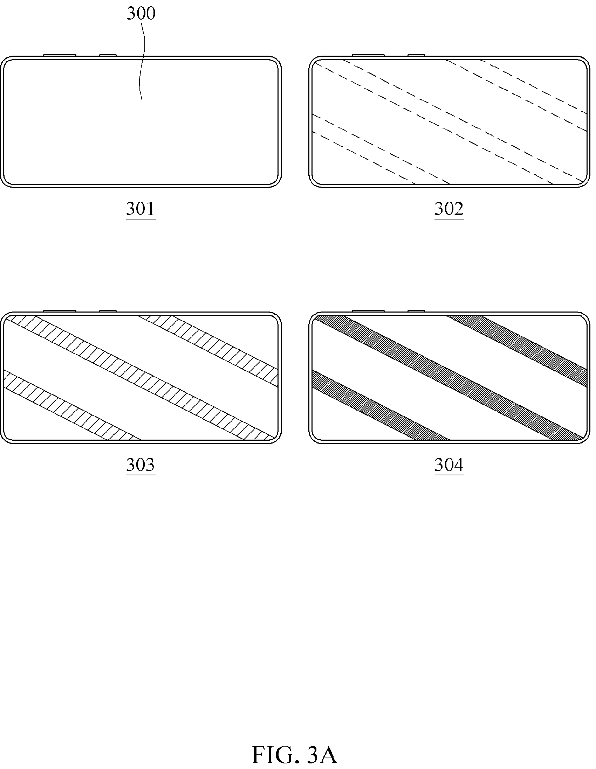

FIG. 3A is a diagram schematically illustrating a subject device from which a flickering phenomenon is detected, according to an embodiment.

Referring to FIG. 3A, according to an embodiment, an image may be acquired by capturing a subject device 300 (e.g., the electronic device 104 of FIG. 1) by the electronic device 101 using the camera module 180. The electronic device 101 according to an embodiment may adjust a shutter speed. The subject device 300 according to an embodiment may output an image to a display at a scan rate of 60 hertz (Hz).

The shutter speed may be a numerical value indicating how long a shutter curtain is open in the camera module 180, according to an embodiment. For example, a case in which the shutter speed is about 17 milliseconds (ms) (60 Hz) may indicate that the shutter curtain is open by 17 ms and may indicate that an amount of light is applied to the image sensor 230 for 17 ms of time through a lens before photo data is determined. When the shutter speed is short, an image may become dark due to insufficient amount of light, or when the shutter speed is long, the amount of light may be excessive so that an image may be excessively bright.

In the flickering phenomenon, when the display outputs an image, V_{data} and Scan lines pass one more time when moving from an element of the display to the next frame, and here, the realignment time may be required. During the realignment time, current may not be applied for a while, so the element of the display may not maintain the light-emitting state, and thus, the flickering phenomenon may occur when capturing is performed during the realignment time.

According to an embodiment, an image 301 may be the image 301 acquired by capturing the subject device 300 when the shutter speed of the electronic device 101 is set to 60 Hz. According to an embodiment, since the shutter speed of the electronic device 101 and the scan rate of the subject device 300 match each other to reflect the full cycle of the subject device 300, the flickering phenomenon may not be observed.

According to an embodiment, an image 302 may be the image 302 acquired by capturing the subject device 300 when the shutter speed of the electronic device 101 is set to 90 Hz. According to an embodiment, when the shutter speed of the electronic device 101 is higher than the scan rate (e.g., 60 Hz) of the subject device 300, capturing may be performed even during the realignment time of the subject device 300, and thus, the flickering phenomenon may be observed.

According to an embodiment, an image 303 may be the image 303 acquired by capturing the subject device 300 when the shutter speed of the electronic device 101 is set to 120 Hz. According to an embodiment, as the shutter speed of the electronic device 101 becomes higher than the scan rate of the subject device 300, the frequency in which capturing is performed during the realignment time of the subject device 300 may increase, and thus, the flickering phenomenon may be observed more clearly.

According to an embodiment, an image 304 may be the image 304 acquired by capturing the subject device 300 when the shutter speed of the electronic device 101 is set to 250 Hz. According to an embodiment, when the shutter speed of the electronic device 101 is excessively higher than the scan rate of the subject device 300, the frequency in which capturing is performed during the realignment time of the subject device 300 may increase more than when the shutter speed is low, and thus, the flickering phenomenon may be observed more clearly.

The embodiments of the present disclosure only represent some of the shutter speed of the electronic device 101 and the scan rate of the subject device 300, and the shutter speed and the rate in which the flickering phenomenon occurs are not limited to the described embodiments.

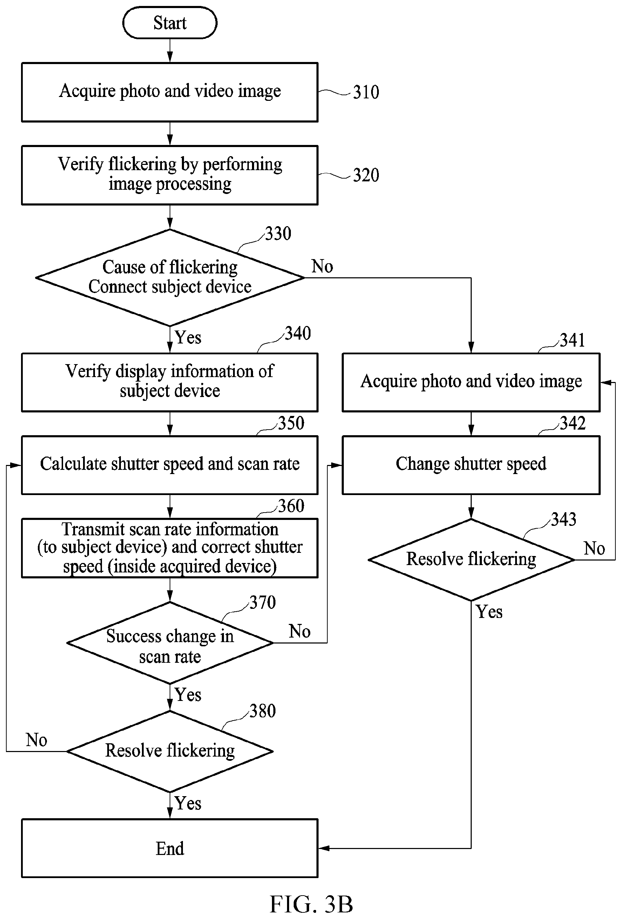

A method of correcting the flickering phenomenon described above is provided in detail below with reference to FIGS. 3B to 6.

FIG. 3B is a flowchart schematically illustrating a flickering correction method according to an embodiment.

Referring to FIG. 3B, operations 310 to 380 may be performed by the electronic device 101 described with reference to FIGS. 1 to 3A, and the description provided with reference to FIGS. 1 to 3A may be equally applied to the description provided with reference to FIG. 3B, and a repeated description thereof is omitted.

Although operations of FIG. 3B may be performed in the illustrated order and manner, the order of some operations may be changed or some operations may be omitted without departing from the spirit and scope of the embodiments, and operations shown in FIG. 3B may be performed in parallel or simultaneously.

In operation 310, the electronic device 101 according to an embodiment may acquire a photo and a video image (hereinafter, referred to as an image) output to the display of the subject device 300 (e.g., the electronic device 104 of FIG. 1).

In operation 320, the electronic device 101 according to an embodiment may verify flickering by performing image processing on the acquired images 301 to 304. The processor 120 may continuously perform image processing in the background of the electronic device 101 and may perform flickering correction when a flickering phenomenon is detected during the image processing.

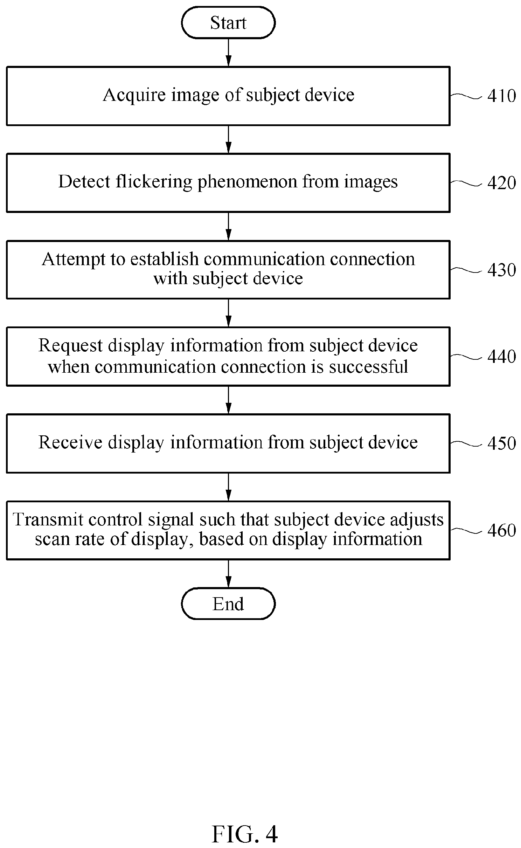

In operation 330, the electronic device 101 according to an embodiment may attempt to establish communication with the subject device 300. A method in which the electronic device 101 according to an embodiment attempts to establish communication with the subject device 300 is described in detail below with reference to FIGS. 4 to 6.

In operation 340, the electronic device 101 according to an embodiment may verify display information of the subject device 300 when a communication connection between the electronic device 101 and the subject device 300 is successful.

In operation 341, when the electronic device 101 according to an embodiment fails in the communication connection with the subject device 300, the electronic device 101 may acquire the photo and video output to the display of the subject device 300. The electronic device 101 according to an embodiment may verify the flickering phenomenon of the acquired images 301 to 304. When the flickering phenomenon of the acquired images 301 to 304 is verified in operation 341, the electronic device according to an embodiment may proceed to operation 342 of adjusting the shutter speed of the electronic device 101 according to the degree of the verified flickering phenomenon.

In operation 342, the electronic device 101 according to an embodiment may control the camera module 180 to change (or adjust) the shutter speed.

In operation 343, the electronic device 101 according to an embodiment may repeat operations 341 and 342 when flickering is not resolved even after the shutter speed is changed.

In operation 350, the electronic device 101 according to an embodiment may calculate the shutter speed of the electronic device 101 and the scan rate of the electronic device 101, based on the display information of the subject device 300.

In operation 360, the electronic device 101 according to an embodiment may transmit the calculated scan rate information to the subject device and apply the calculated shutter speed to the electronic device 101.

In operation 370, the subject device 300 according to an embodiment may attempt to change the scan rate of the display of the subject device 300, based on the scan rate information received from the electronic device 101.

In operation 380, according to an embodiment, when flickering is not corrected despite the change of the scan rate of the subject device 300, the electronic device 101 and the subject device 300 may return to operation 350 and repeat operations 350 to 370 until the flickering is resolved.

Operations 310 to 380 described above may be provided in detail below with reference to FIGS. 4 to 6.

FIG. 4 is a flowchart illustrating a control method of an electronic device, according to an embodiment.

Referring to FIG. 4, operations 410 to 460 may be performed by the electronic device 101 (or the processor 120) described with reference to FIGS. 1 to 3B, and the description provided with reference to FIGS. 1 to 3B may be equally applied to the description provided with reference to FIG. 4, and a repeated description thereof is omitted.

Although operations of FIG. 4 may be performed in the illustrated order and manner, the order of some operations may be changed or some operations may be omitted without departing from the spirit and scope of the embodiments, and operations shown in FIG. 4 may be performed in parallel or simultaneously.

Referring to FIG. 4, the electronic device 101 according to an embodiment may capture the subject device 300 (e.g., the electronic device 104 of FIG. 1), detect a flickering phenomenon from the images 301 to 304 acquired by performing capturing, and perform alleviating of the flickering phenomenon.

In operation 410, the electronic device 101 (or the processor 120) according to an embodiment may acquire an image of the subject device 300 through the camera module 180.

In operation 420, the electronic device 101 (or the processor 120) according to an embodiment may detect the flickering phenomenon from the acquired images 301 to 304. The processor 120 of the electronic device 101 according to an embodiment may receive the image from the camera module 180 and detect the flickering phenomenon from the image.

The electronic device 101 (or the processor 120) according to an embodiment may perform image processing on the images 301 to 304 acquired through the camera module 180 and verify the flickering phenomenon.

In operation 430, the electronic device 101 (or the processor 120) according to an embodiment may attempt to establish a communication connection with the subject device 300 through the communication module 190.

The electronic device 101 (or the processor 120) according to an embodiment may verify whether the image output to the display of the subject device 300 corresponds to the acquired images 301 to 304.

The electronic device 101 according to an embodiment may transmit, to the subject device 300, a control signal (e.g., an advertising signal) including a media access control (MAC) address of the electronic device 101 and information of the acquired images 301 to 304 through the communication module 190. The subject device 300 according to an embodiment may receive, from the electronic device 101, the control signal including the MAC address of the electronic device 101 and the information of the acquired images 301 to 304. The subject device 300 according to an embodiment may transmit, to the electronic device 101, a message including a MAC address of the subject device 300 and the information of the acquired images 301 to 304 when it is determined that data included in the control signal received from the electronic device 101 matches or is similar to at least a portion of a screen being output through the display of the subject device 300. When the electronic device 101 according to an embodiment receives the message about the MAC address of the subject device 300 and the information of the acquired images 301 to 304 through the communication module 190, the electronic device 101 may connect communication with the subject device 300.

According to an embodiment, the electronic device 101 (or the processor 120) may calculate the scan rate to be adjusted by the subject device 300 by referring to the shutter speed of the electronic device 101 when the communication with the subject device 300 is connected.

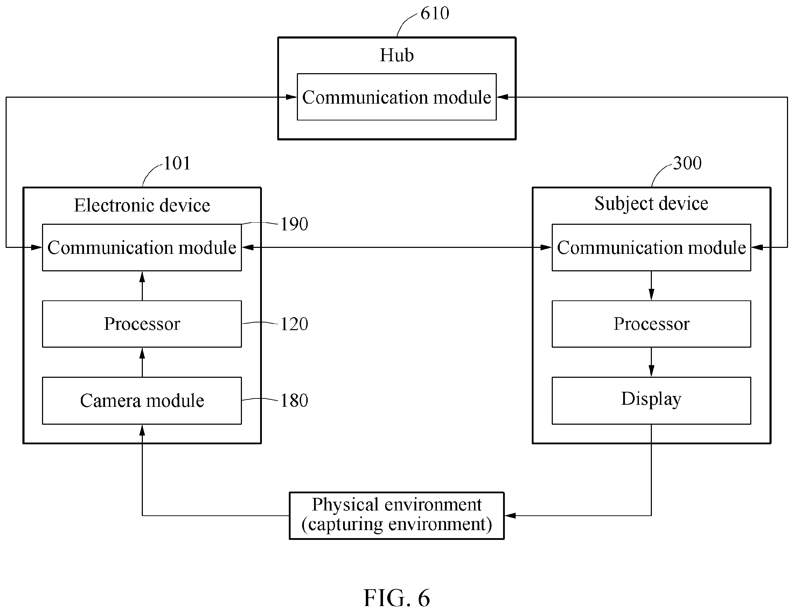

When the message about the MAC address of the subject device 300 and the information of the acquired images 301 to 304 fails to be received, the electronic device 101 according to an embodiment may transmit the control signal including the MAC address of the electronic device 101 and the information of the acquired images 301 to 304 to a hub that mediates communication between the electronic device 101 and the subject device 300. A communication method through the hub may be described in detail below with reference to FIG. 6.

In operation 440, the electronic device 101 according to an embodiment may request display information of the subject device 300 from the subject device 300 when the communication connection through the communication module 190 is successful.

In operation 450, the electronic device 101 according to an embodiment may receive the display information of the subject device 300 from the subject device 300 through the communication module 190.

The electronic device 101 according to an embodiment may receive information about the scan rate that is adjustable by the subject device 300 through the communication module 190.

The electronic device 101 (or the processor 120) according to an embodiment may control the shutter speed of the camera module 180, based on the information about the scan rate that is adjustable by the subject device 300.

In operation 460, the electronic device 101 according to an embodiment may transmit the control signal such that the subject device 300 adjusts the scan rate of the display, based on the display information of the subject device 300.

The electronic device 101 according to an embodiment may transmit the calculated scan rate to the subject device 300 together with the control signal through the communication module 190.

The electronic device 101 (or the processor 120) according to an embodiment may adjust the shutter speed of the electronic device 101, based on the display information.

For example, the electronic device 101 according to an embodiment may transmit the scan rate to be set by the subject device 300 by referring to the shutter speed of the electronic device. In a situation in which the shutter speed of the electronic device 101 is maintained, the scan rate of the subject device 300 may be adjusted until the flickering phenomenon is corrected for as much as possible. When the scan rate of the subject device 300 according to an embodiment may not be adjusted to the scan rate transmitted from the electronic device 101, the subject device 300 may transmit the current state of the subject device 300 to the electronic device 101. The electronic device 101 according to an embodiment may adjust the shutter speed of the electronic device 101, based on the received state of the subject device 300.

In the communication with the subject device 300 described above, when the electronic device 101 according to an embodiment fails to establish the communication with the subject device 300 and communication through the mediating hub, the processor 120 may correct flickering using the shutter speed of the camera module 180 and brightness value correction.

When the shutter speed of the electronic device 101 according to an embodiment is adjusted to be slow, a phenomenon in which the brightness value of images to be acquired by the electronic device 101 increases may occur. The electronic device 101 according to an embodiment may adjust the brightness value by adjusting the aperture when the shutter speed is slow.

According to an embodiment, when the shutter speed of the camera module 180 of the electronic device 101 becomes slow, the aperture of a camera may be opened narrowly in response to the slowed shutter speed. As a result, it may be possible to alleviate a blurring phenomenon that may occur at a close distance by resulting in a high depth of field. In capturing technology, the depth of field is a range in which a photo is recognized as being in focus and may refer to a change in distance to the extent that there is no distinction between when an image is in focus and when the image is out of focus, in which the image is formed when an object in front of a stationary lens changes its position so that a distance from the lens is different. The processor 120 according to an embodiment may analyze an image acquired by the shutter speed and the adjusting of the aperture described above and extract a contrast value for the existing image and a natural blurring phenomenon. The processor 120 may verify the contrast value and respond by borrowing a sensitivity value that is less sensitive to light by lowering an ISO(International Organization for Standardization) value, which is the sensitivity of a complementary metal-oxide-semiconductor (CMOS) (or a charged coupled device (CCD) (not shown) of the camera module 180 when the acquired image exceeds the degree of the natural blur compared to the existing image.

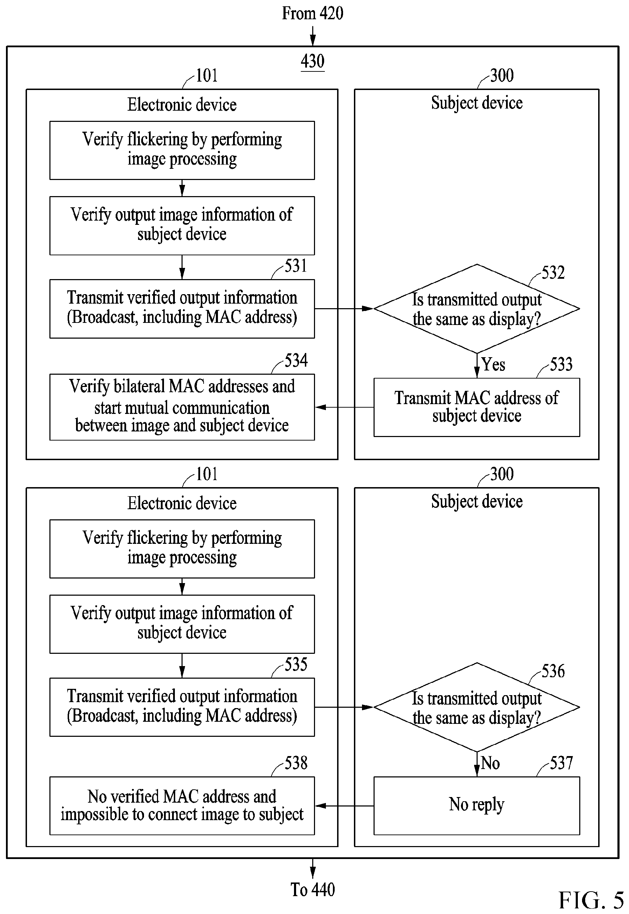

FIG. 5 is a flowchart illustrating a communication connection between an electronic device and a subject device, according to an embodiment.

Referring to FIG. 5, operations 531 to 538 may be performed by the electronic device 101 described with reference to FIGS. 1 to 4, and the description provided with reference to FIGS. 1 to 4 may be equally applied to the description provided with reference to FIG. 5, and a repeated description thereof is omitted.

Although operations of FIG. 5 may be performed in the illustrated order and manner, the order of some operations may be changed or some operations may be omitted without departing from the spirit and scope of the embodiments, and operations shown in FIG. 5 may be performed in parallel or simultaneously.

Operations 531 to 534 are operations performed in operation 430 and may be operations when a communication connection between the electronic device 101 and the subject device 300 is successful, according to an embodiment.

Operations 535 to 538 are operations performed in operation 430 and may be operations when the communication connection between the electronic device 101 and the subject device 300 fails, according to an embodiment.

When flickering is verified in image processing, the electronic device 101 according to an embodiment may verify output image information of the subject device 300. The electronic device 101 according to an embodiment may acquire screen information by undergoing a process of correcting a screen to a flat screen to obtain information about the screen currently operating in the subject device 300, even when an image is distorted due to a factor such as the subject device 300 being tilted.

In operation 531, the electronic device 101 according to an embodiment may transmit the verified output information to the subject device 300. The verified output information, according to an embodiment, may be information of the images 301 to 304 acquired by capturing the subject device 300 by the electronic device 101. The electronic device 101 according to an embodiment may perform one-way advertising (broadcasting) for transmitting a MAC address of the electronic device 101 and screen information of the electronic device 101 together with the verified output information.

In operation 532, the subject device 300 according to an embodiment may determine whether an output (e.g., the output image information) received from the electronic device 101 corresponds to the screen output to the display of the subject device 300.

In operation 533, the subject device 300 according to an embodiment may transmit the MAC address of the subject device 300 to the electronic device 101 when the output received from the electronic device 101 corresponds to the screen output to the display. The subject device 300 according to an embodiment may reply with a message indicating that the verified output information corresponds to the image output to the subject device 300.

In operation 534, when the MAC address of the subject device 300 and the message are received, the electronic device 101 according to an embodiment may start mutual communication between the electronic device 101 and the subject device 300.

In operation 535, the electronic device 101 according to an embodiment may transmit the verified output information to the subject device 300. The electronic device 101 according to an embodiment may perform one-way advertising (broadcasting) for transmitting the MAC address of the electronic device 101 and the screen information together with the verified output information.

In operation 536, the subject device 300 according to an embodiment may determine whether the output received from the electronic device 101 corresponds to the screen output to the display of the subject device 300.

In operation 537, when it is determined that the output received from the electronic device 101 does not correspond to the screen output to the display, the subject device 300 according to an embodiment may not transmit the MAC address of the subject device 300 to the electronic device 101.

In operation 538, when the message fails to be received from the subject device 300, the electronic device 101 according to an embodiment may perform operation 535 again or may correct flickering by adjusting only the shutter speed of the electronic device 101.

Even when the subject device 300 according to an embodiment may not perform the operation described above, the electronic device 101 may fail to receive the message. Even when the subject device 300 according to an embodiment sends a message that the scan rate may not be adjusted, the electronic device 101 may correct flickering by adjusting the shutter speed, like a case in which the message fails to be received.

FIG. 6 illustrates communication through a hub between an electronic device and a subject device, according to an embodiment.

As illustrated in FIG. 6, one or more blocks and a combination thereof may be implemented by a special-purpose hardware-based computer that performs a predetermined function or a combination of computer instructions and special-purpose hardware.

A communication method through a hub 610 according to an embodiment may be performed through a communication module between the electronic device 101, the subject device 300, and the hub 610.

The hub 610 according to an embodiment may include the communication module and a processor (not shown).

During acquisition of an image, when the subject device 300 does not support a wireless connection or it is difficult to perform the communication connection described above due to insufficient operation performance, the electronic device 101 according to an embodiment may perform the communication connection with the help of an external device such as the hub 610.

According to an embodiment, even in a situation in which the screen of the subject device 300 is turned backward, the communication connection may be performed with the help of the hub 610.

According to an embodiment, during the communication connection through the hub 610, the hub 610 may identify the position of the subject device. The hub 610 according to an embodiment may also use communication, such as Bluetooth low energy (BLE), to identify the position of the electronic device 101.

The electronic device 101 according to an embodiment may share the position of the electronic device 101 acquired through the sensor module 176 with the hub 610 and use the position of the electronic device 101 to communicate with the subject device 300.

The hub 610 according to an embodiment may cause the mutual communication connection by acquiring the MAC address itself between the subject device 300 and the electronic device 101 connected to the hub 610 through the determination processes described above, or the hub 610 may directly exchange data.

The electronic device according to the embodiments disclosed herein may be one of various types of electronic devices. The electronic device may include, for example, a portable communication device (e.g., a smartphone), a computer device, a portable multimedia device, a portable medical device, a camera, a wearable device, or a home appliance device. According to an embodiment of the disclosure, the electronic device is not limited to those described above.

It should be appreciated that various embodiments of the present disclosure and the terms used therein are not intended to limit the technological features set forth herein to particular embodiments and include various changes, equivalents, or replacements for a corresponding embodiment. In connection with the description of the drawings, like reference numerals may be used for similar or related components. It is to be understood that a singular form of a noun corresponding to an item may include one or more of the things, unless the relevant context clearly indicates otherwise. As used herein, "A or B," "at least one of A and B," "at least one of A or B," "A, B or C," "at least one of A, B and C," and "at least one of A, B, or C," each of which may include any one of the items listed together in the corresponding one of the phrases, or all possible combinations thereof. Terms, such as "first" or "second", are simply used to distinguish a component from another component and do not limit the components in other aspects (e.g., importance or sequence). It is to be understood that if an element (e.g., a first element) is referred to, with or without the term "operatively" or "communicatively," as "coupled with," "coupled to," "connected with," or "connected to" another element (e.g., a second element), it means that the element may be coupled with the other element directly (e.g., by wire), wirelessly, or via a third element.

As used in connection with an embodiment of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., the internal memory 136 or the external memory 138) that is readable by a machine (e.g., the electronic device 101) For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include code generated by a compiler or code executable by an interpreter. The machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments disclosed herein may be included and provided in a computer program product. The computer program product may be traded as a product between a seller and a buyer. The computer program product may be distributed in the form of a machine-readable storage medium (e.g., compact disc read-only memory (CD-ROM)), or be distributed (e.g., downloaded or uploaded) online via an application store (e.g., PlayStoreTM), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities, and some of the multiple entities may be separately disposed in different components. According to an embodiment, one or more of the above-described components may be omitted, or one or more other components may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration.

According to an embodiment, operations performed by the module, the program, or another component may be carried out sequentially, in parallel, repeatedly, or heuristically, or one or more of the operations may be executed in a different order or omitted, or one or more other operations may be added.

## Claims

1. A control method of an electronic device (101), the control method comprising:
acquiring an image of a subject device (104; 300);
detecting a flickering phenomenon from the image;
attempting to establish a communication connection with the subject device (104; 300);
requesting display information from the subject device (104; 300) when the communication connection is successful;
receiving the display information from the subject device (104; 300); and
transmitting a control signal such that the subject device (104; 300) adjusts a scan rate of a display, based on the display information.

2. The control method of claim 1, wherein the attempting to establish of the communication connection comprises verifying whether an image output to the display of the subject device corresponds to the acquired image.

3. The control method of claim 2, wherein the verifying comprises:
transmitting, to the subject device, a control signal comprising a media access control (MAC) address of the electronic device and information of the acquired image; and
connecting communication with the subject device when the electronic device receives a message about a MAC address of the subject device and the information of the acquired image.

4. The control method of claim 3, further comprising:
calculating a scan rate to be adjusted by the subject device by referring to a shutter speed of the electronic device when the communication with the subject device is connected.

5. The control method of claim 4, wherein the transmitting of the control signal comprises transmitting the calculated scan rate to the subject device together with the control signal.

6. The control method of claim 4, wherein the receiving of the display information comprises:
receiving information about the scan rate to be adjusted by the subject device;
controlling a shutter speed of a camera module (180), based on the information about the scan rate.

7. The control method of claim 3, further comprising:
when the message about the MAC address of the subject device and the information of the acquired image fails to be received, transmitting the control signal comprising the MAC address of the electronic device and the information of the acquired image to a hub (610) that mediates communication between the electronic device and the subject device.

8. The control method of claim 1, further comprising:
adjusting a shutter speed based on the display information.

9. The control method of claim 1, wherein the detecting of the flickering phenomenon comprises verifying the flickering phenomenon by performing image processing on the acquired image.

10. The control method of claim 7, comprising:
correcting flickering using a shutter speed of a camera module (180) and brightness value correction when a communication module fails to establish the communication with the subject device and communication through the hub.

11. An electronic device (101) comprising:
a camera module (180) configured to acquire an image of a subject device (104; 300);
a processor (120) configured to receive the image from the camera module (180) and configured to detect a flickering phenomenon from the image; and
a communication module (190) configured to attempt to establish a communication connection with the subject device,
wherein the communication module (190) is configured to request display information from the subject device (104; 300) when the communication connection is successful and configured to receive the display information from the subject device (104; 300),
wherein the processor (120) is configured to transmit, to the subject device (104; 300), a control signal such that the subject device (104; 300) adjusts a scan rate of a display through the communication module (190), based on the display information.

12. The electronic device of claim 11, wherein
the processor is configured to verify whether an image output to the display of the subject device corresponds to the acquired image,
the communication module is configured to:
transmit, to the subject device, a control signal comprising a MAC address of the electronic device and information of the acquired image;
connect communication with the subject device when the electronic device receives a message about a MAC address of the subject device and the information of the acquired image.

13. The electronic device of claim 12, wherein
the processor is configured to calculate a scan rate to be adjusted by the subject device by referring to a shutter speed of the electronic device when the communication with the subject device is connected,
the communication module is configured to:
transmit the calculated scan rate to the subject device;
receive information about the scan rate to be adjusted by the subject device.

14. The electronic device of claim 13, wherein the processor is configured to control a shutter speed of the camera module, based on the information about the scan rate.

15. The electronic device of claim 12, wherein
the communication module is configured to, when the communication module fails to receive the message about the MAC address of the subject device and the information of the acquired image, transmit the control signal comprising the MAC address of the electronic device and the information of the acquired image to a hub (610) that mediates communication between the electronic device and the subject device,
the processor is configured to correct flickering using a shutter speed of the camera module and brightness value correction when the communication module fails to establish the communication with the subject device and communication through the hub.
